(19) Europäisches Patentamt
European Patent Office
Office européen des brevets

(11) Publication number: 0 115 188 B1

(12) EUROPEAN PATENT SPECIFICATION

(45) Date of publication of patent specification: 03.12.86

(51) Int. Cl.$^4$: B 01 J 29/06, B 01 J 37/02

(21) Application number: 83307909.8

(22) Date of filing: 22.12.83

(54) **Metal zeolite catalyst preparation.**

(30) Priority: 30.12.82 US 454886

(43) Date of publication of application: 08.08.84 Bulletin 84/32

(45) Publication of the grant of the patent: 03.12.86 Bulletin 86/49

(84) Designated Contracting States: BE CH DE FR GB IT LI NL

(56) References cited:
EP-A-0 068 754
GB-A- 909 269
GB-A- 937 749
US-A-4 292 253

ACCOUNTS OF CHEMICAL RESEARCH, vol. 8, no. 12, December 1975, pages 393-399, American Chemical Society, Washington, US, K.J. KLABUNDE: Organic chemistry of metal vapors"

(73) Proprietor: Ozin, Geoffrey Alan
63 Gormley Avenue
Toronto Ontario M4V 1Y9 (CA)
(73) Proprietor: Nazar, Linda Faye
378 Delaware Avenue
Toronto Ontario (CA)
(73) Proprietor: Hughes, Francois
2 Avenue Felix Faure EscB 11 eme Etage Apt 2213
F-92000 Nanterre (FR)

(72) Inventor: Ozin, Geoffrey Alan
63 Gormley Avenue
Toronto Ontario M4V 1Y9 (CA)
Inventor: Nazar, Linda Faye
378 Delaware Avenue
Toronto Ontario (CA)
Inventor: Hughes, Francois
2 Avenue Felix Faure EscB 11 eme Etage Apt 2213
F-92000 Nanterre (FR)

(74) Representative: Harrison, Michael Robert et al
URQUHART-DYKES & LORD 5th Floor Tower House Merrion Way
Leeds LS2 8PA West Yorkshire (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 115 188 B1

Courier Press, Leamington Spa, England.

**Description**

This invention relates to solid catalysts for performing heterogeneous phase reactions, and processes for their preparation. More particularly, it relates to metal catalysts in which the metal atoms are present in substantially zero-valent, small cluster form, in association with crystalline zeolite supports, and processes for their preparation.

Heterogeneous catalysis processes, using metal catalysts, are of commercial importance in a large number of chemical and petrochemical processes. In all cases, the economic performance of the processes depends, to a greater or lesser extent, on the activity of the catalyst, its selectivity towards the desired reaction product, and the cost and complexity of preparation of the catalyst in its most advantageous form for use in the particular process under consideration. For most efficient catalysis, the catylist should have large metallic surface area, i.e. a large surface area to bulk ratio. This is achieved by producing the catalyst comprising individual occurrences of metal atoms (monatomic) where most of the metal atoms are atoms in the zero-valent form and wherein the individual occurence of metal atoms (monatomic) form aggregates or clusters of up to 100 atoms per cluster. As used herein the term "cluster" refers to metal atoms weakly or strongly coupled, through space or through a support, a significant proportion of the metal atoms being in zero-valent state and generally separated by a distance of six Angstroms (Å) (0,6 nm) or less. Such a cluster includes any aggregation of two or more metal atoms, of the same or different species, regardless of whether they occur in substantially one dimensional form (i.e. a chain of metal atoms), or two-dimensional form (i.e. a planar arrangement), a spiral arrangement or a three dimentional structure.

When bulk metals, especially transition metals, are vaporized e.g. by resistive heating, the initially formed vapor is in the monatomic condition. Very rapidly indeed, under normal conditions, the single metal atom agglomerate into small clusters on a surface, and then very rapidly bulk, colloidal metal is formed by further agglomeration.

U.S. Patent No. 4,292,253, Ozin et al, issued September 29, 1982, describes a process for preparation of a catalyst in which the catalytic metal is present, in significant amounts, in small cluster form and is stable at or near room temperatures. The process described involves the generation of vapors of the metal in a high vacuum environment and in the vicinity of a liquid polymer, so that the metals are effectively "trapped" by the polymer in monotomic or small cluster form and prevented from recombing to form colloidal metal.

Zeolites are a well-known and widely used type of heterogenous catalyst, especially in connection with hydrocarbon reactions. Zeolites, also known as molecular sieves, are detailed in the texts "Zeolite Molecular Sieves" by D. W. Breck, John Wiley and Sons, Inc., N.Y., N.Y. (1974), "Chemistry of Catalytic Processes" by B. C. Gates, J. R. Katzer, and G. C. A. Schuit, McGraw-Hill, N.Y., N.Y. (1979), "Fluid Catalytic Cracking with Zeolite Catalysts" by P. B. Venuto and E. T. Habib, Marcel Dekker Inc., N.Y., N.Y. (1979) and "Heterogeneous Catalysis in Practice" by C. N. Satterfield, McGraw-Hill, N.Y., N.Y. (1980) Advances in zeolite technology and applications based on U.S. Patents issued since 1977 are described by J. Scott in "Zeolite Technology and Applications, Recent Advances", Noyes Data Corp., Park Ride, N.J. (1980). A proceeding by an international symposium is "Catalysis by Zeolites" by Imelik et al, Elsevier Scientific Publishing Co., N.Y., N.Y. (1980). P. Gallezot describes "the State and Catalytic Properties of Platinum and Palladium in Faujasite-Type Zeolites" in Catal. Rev.-Sci, Eng., 20, 121—154 (1979).

Zeolites are basically alumino silicates of alkali or alkaline earth metals, initially combined with substantial amounts of water of hydration. They possess a characteristic crystal structure which derives from the tetrahedral configuration of the $SiO_4$ unit which they contain, and the sharing of oxygen atoms from these tetrahedra with $A1O_4$-tetrahedra also present. Alkali or alkaline earth metal ions associate with the crystal lattice structure to satisfy the resultant electrostatic charge. The result is a three dimensional crystal structure having therein major and minor cavities, connected by channels, both the cavities and the channels being of substantially constant narrowly defined size, in any given zeolite material. The channels and the cavities are of a size comparable to the dimensions of molecules. Small molecules may enter the cavities, and hence penetrate the pores of the zeolite whereas larger molecules may not — thus the materials can act as sieves, to separate molecules and hence to separate molecular mixtures into their component parts. Any reactants deposited on the inside surface of the cavity will only contact and react with molecules small enough to enter the cavity, thus offering the possibility of arranging for highly selective chemical reactions. Zeolite molecular sieves can be subjected to ion exchange reactions whereby the alkali or alkaline earth metal present in ionic form is exchanged for a different ionic species. Since normally much of the pore volume of the crystalline zeolite is occupied by water of hydration, the zeolite must be dehydrated, without destroying the crystal lattice structure, before it can mormally be used as an effective catalyst.

D. Frenkel and B. G. Gates (J. Am. Chem. Soc., 102, 2478 (1980)) describe zeolite-encapsulated cobalt clusters prepared by the reduction of Co (II) cations exchanged into the A and Y type zeolites. Furthermore, metal vapors, especially cadmium vapors, were used to reduce the cobalt (II) cation to zero-valent cobalt thus leaving ionic cadmium species and metallic cobalt within the zeolite cavity.

In the present invention, metal in the zero-valent (atomic) state is deposited in and on the zeolite. No reducing agent is needed, hence no other metal cation such as cadmium, as a result of reduction-oxidation, is co-deposited in and on the zeolite. No significant amounts of metallic contaminants, deriving from deposition agents, remain in the catalyst. Moreover, the manner in which the catalytically active metal is deposited by low pressure metal vapor deposition is entirely different.

It is an object of the present invention to provide a novel zeolite catalyst useful in heterogeneous phase chemistry wherein said catalyst is comprised of a zeolite having a substantial amount (that quantity capable of producing a chemical tranformation) of catalytically active metal deposited in the zeolite cavities, wherein the metal is comprised of individual occurrences of atoms of one or more metallic elements and clusters formed by aggregation thereof.

It is another object of the present invention to provide a novel process for preparing zeolite catalysts usual in heterogeneous phase chemical reactions.

As used herein the term "solvent" defines a substance used herein to dissolve the metal-complex such that the metal complex-solvent mixture results in a solution.

In the process of the present invention, metals are introduced into or onto dehydrated zeolite catalyst supports, in a catalytically active form, by deposition of solvated metal atoms which can aggregate to clusters from solution into a liquid organic solvent. A single metal can be deposited into or onto a zeolite support or a plurality of metals can be deposited thereon, either simultaneously or sequentially by means of this process.

The desired catalytic metal is vaporized into the liquid solvent. Monatomic zero-valent metal which can aggregate to form small clusters is produced in the vaporization process. The metal becomes solvated by the solvent in the form of a labile solvated metal complex dissolved in the solvent. In this form, the solvated metal complex and solvent contact the zeolite support, so that solvated metal can diffuse into the cavities of the zeolite support. After sufficient metal complex has diffused into the zeolite support, the excess of solvated metal complex and liquid solvent can be removed, e.g. by filtering, and then the composite warmed. On doing so, the labile solvated metal complex dissociates, leaving zero-valent metal in the zeolite cavities. This zero-valent metal aggregates therein to form small clusters. Some metal clusters can form also on the surface of the zeolite. Macro, colloidal metal is unlikely to form in the zeolite cavity, because of the space limitations therein. The resultant metal-loaded zeolite catalyst is stable at room or elevated temperatures, and has catalytic activity.

According to one aspect of the present invention, there is provided a zeolite-metal catalyst having an effective amount of catalytically active metal in the form of substantially zero-valent clusters of metal atoms, at least 80% of the metal clusters within the zeolite cavity being of a size within about a five Angstrom (015 nm) range.

Preferably the clusters of metal atoms within the zeolite cavity are of a size range of from about 4 Å (0,4 nm) to about 12 Å (1,2 nm), at least 80% thereof being within a five Å (0,5 nm) range inside said size range.

According to another aspect of the invention, there is provided a process of preparing zeolite-metal catalysts having a substantial amount of catalytically active metal deposited in the cavities of the zeolite in zero-valent, small cluster form, which comprises:

vaporizing the metal in the vicinity of an organic liqid solvent;

dissolving the metal as a labile solvated zero-valent complex in the liquid solvent;

contacting a solution of the solvated metal complex, with a solid crystalline material so as to cause diffusion of the solvated metal complex into the cavities of the zeolite;

removing excess liquid solvent or solution;

and allowing the zeolite to warm so as to decompose the labile solvated metal complex on the cavities and deposit zero-valent small cluster metal therein.

Preferably the metal vaporization, the dissolving of the metal, the contacting with zeolite and the removal of excess liquid all take place at low temperatures. More preferably the low temperature is from room temperature down to the freezing point of the chosen solvent.

The catalytic products of the present invention are zeolite-metal catalysts in which the catalytically active metal is present in effective amounts in substantially zero-valent clusters or metal atoms. The clusters exhibit a high degree of uniformity of size in any given zeolite-metal catalyst batch. At least about 80% of the metal clusters within the zeolite cavities of the batch are within about a five Angstom range. This can lead to significant practical advantages in use of the catalyst, e.g. an improved selectivity of the catalytic activity towards various gas phase reactions. The avoidance of the use of high temperatures in the process of metal deposition onto the zeolite in the present invention favours the formation of clusters of substantially uniform size, due to kinetic factors. Moreover, the catalysts of the present invention are substantially free from any residual contaminants resulting from the use of a co-deposition agent such as a metal vapor. The only agent used in the metal deposition process of the present invention is the solvent, and this is substantially completely removed from the catalyst e.g. by volatilization, leaving only traces of impurities which are totally insignificant as far as subsequent catalytic activity is concerned.

In the accompanying drawings:

Figure 1 is a graphical presentation of the magnetic measurements conducted on catalyst samples made in Example 1.

Figure 2 is a Mossbauer spectrum of the catalyst sample of Example 2.

Preferred metals for use in the process of the present invention are transition metals such as titanium, zirconium, vanadium, niobium, tantalum, molybdenum, chromium, iron, cobalt, nickel, rhodium, ruthenium, osmium, irridium, palladium, platinum, tungsten, copper and silver. Most preferred are the

platinum group metals, namely iron, ruthenium, osmium, cobalt, rhodium, irridium, nickel, palladium and platinum, and also titanium, vanadium, chromium, molybdenum and silver. Preferred zeolites are those classed as zeolites Y and zeolites X (Faujasite types). Prior to use in the process of the present invention, the zeolite should be dehydrated, using methods well known in the art. The use of synthetic zeolites, such as ZMS 5®, as well as natural zeolites, is within the scope of the invention.

The conditions under which the catalyst is prepared should be chosen so that the solvated metal complex is readily formed and maintained long enough for contact with the zeolite to be accomplished, without substantial colloidal metal formation. The best conditions will vary depending upon the choice of metal and solvent. In most cases, the metal will need to be vaporized under conditions of low vapor pressure, to ensure that sufficient zero-valent monatomic or small cluster metal contacts the solvent. Also in most cases, the metal vaporization and solvent contacting should be done at low temperatures, since many of the suitable solvated metal complexes are only stable at low temperatures.

It is preferred to form a slurry of the zeolite catalyst support in the chosen solvent (in which the zeolite is substantially insoluble), and then to contact the slurry with the vapor of the metal, or with a preformed solution of the solvated metal complex. In this way, the risk of formation of colloidal metal prior to contacting the zeolite is minimized.

In order to obtain homogeneity of the metal dispersion throughout the zeolite catalyst, it is preferred to vaporize the metal in the vicinity of a thin film of zeolite-solvent slurry, the film being moved continuously relative to the source of vaporizing metal. One way of achieving this to dispose the source of vaporizing metal at the approximate center of an evacuated rotating vessel containing the zeolite-solvent slurry. In this manner, the slurry can be arranged to form a thin film on the walls of the rotating vessel surrounding the source of vaporizing metal, thereby ensuring an even exposure of the slurry to vaporizing metal and, as an end product, a relatively homogeneous solid catalyst. Alternatively, the metal vapor can be deposited into the preferred solvent, and subsequently the solution of solvated metal atoms so formed contacted with the preferred zeolite. Vaporization of the metal can be caused by a variety of known methods, such as resistive heating, electron beam bombardment, laser evaporation and the like, to cause localized heating only of the bulk metal. Suitably, the metal is contained in an electrically heated crucibly located at the center of the rotating evacuated flask.

Suitable apparatus for conducting the process of the present invention is described in the prior art, and is commercially available. For example, such an apparatus is described in British patent specification GB—A 1,483,459 National Research and Development Corporation, published August 17, 1977. A suitable apparatus is commercially available from G. V. Planer Ltd., Sunbury-on-Thames, England, under the designation "Vapor Synthesis Equipment type VSP 101" or "type VSP 302".

The metal cluster may form in the zeolite cavity as linear chains, spirals, planar two-dimensional structures or three-dimensional networks. It is believed that the solvated metal is initially deposited in the zeolite cavity is solvated, monatomic form, and metal clusters are formed subsequently, on removal of the solvent. It is also possible that a small number of the metal atoms being ionized upon removal of the solvent, so that the resultant clusters contain a small proportion of metal ions, giving to the cluster as a whole an overall ionic charge. However, the predominant amount of metal in the cluster remains in the zero-valent form. The metal atoms of the clusters are coupled together weakly (Van der Waals forces) or strongly (covalent bonds), but not to any significant extent by ionic forces.

The amount of metal which is deposited on the zeolite according to the present invention is not critical, provided of course that sufficient metal is deposited to create an active catalyst. Preferred amounts are in the approximate range 0.01—10% by weight, based on the weight of zeolite, most preferred amounts being from about 1 weight % to about 10 weight %.

An example of a specific combination of zeolite, solvent and metal in accordance with the present invention is Faujasite type zeolite, toleune and a metal such as iron, cobalt or nickel, and so for convenience the process of the present invention will be further described with reference thereto. However, this is in no way to be construed as limiting the scope of the invention, and is for ease of further and complete description of the process only.

Iron metal is vaporized by resistive heating, in an apparatus comprising an evacuated flask adapted to rotate on an inclined angle, the vaporizing iron being located in a crucible substantially at the center of the flask. Suitably, for quantitative deposition of metal, it is preferred that *in situ* mass monitor such as a quartz crystal microbalance be employed. The flask contains the slurry of zeolite in toluene. As the metal is vaporized, the flask is rotated about the source of vaporization so that the liquid slurry of solid zeolite and liquid toluene forms a thin film on the walls of the flask. The vaporized iron, in monatomic form $Fe^{\circ}$, contacts and becomes solvated by the toluene, dissolving therein in the form of a labile bis(toluene) iron(o) complex, believed to be of general structure

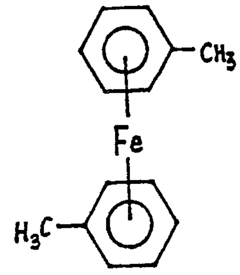

This process is conducted at low vapor pressures within the flask, e.g. $10^{-3}$ — $10^{-5}$ torr, and at low temperatures, e.g. −100°C. In any result, for this combination, the temperature of preparation should not exceed −30°C — −50°C, since at such temperatures and above, the toluene-iron complex dissociates and iron precipitates out of solution as collodial metal.

The thus solvated iron complex contacts the zeolite in the slurry in this form, and migrates or diffuses into the cavities of the zeolite in this form. The iron toluene complex has a molecular size of the order of 7Å (0,7 nm) allowing it to enter through the 7.5Å (0,75 nm) size windows of the α-cavities of the zeolite. The metal vaporization process in the presence of the slurry is continued under these conditions for a suitable period of time until the desired degree of solvated metal complex loading into the zeolite has been attained.

Next, the slurry is removed from the contacting vessel, and the zeolite-iron solid is separated from excess toluene and residual solvated iron complex dissolved therein. For this purpose, the low temperature should be maintained to avoid decomposition of the solvated toluene-iron complex at this stage. Filtration, at temperatures above the solvent freezing point but below about −30°C, is a suitable procedure.

For most catalytic purposes, a zeolite-based catalyst is to be employed in conducting selective catalytic processes, so that the catalytically active chemical species needs to be disposed inside the zeolite cavities. The catalytically active metal atoms or clusters are more stable to agglomeration when disposed within the zeololite cavity. Catalyst on the outside surface of the zeolite will contact all species of a reactant mixture. The next step in the preferred process of the present invention is therefore designed to remove adsorbed solvated iron complexes from the outer surface of the zeolite, resulting from the above contacting steps leaving substantially intact the complexes within the cavities. This is accomplished by washing the solid zeolite-iron material with further solvent, namely toluene, at low temperaturers i.e. lower than −30°C.

While it is important that the metal in the monatomic or small cluster, zero-valent form be deposited within the cavities of the zeolite, unremoved metal deposited on and around the zeolite substrate may be beneficial as a specific and selective catalyst in its own right. In addition, the exterior deposited metal catalyst on the zeolite may be modified, e.g. poisoned, by treatment with appropriate reagents.

After the washing process is completed, the solid zeolite-iron catalyst is allowed to warm up to room temperature, whilst subjected to vacuum pumping to remove some of the toluene formed from decomposition of the solvated iron complex and remaining from the wash operations. As the temperature rises above about −30°C, the bis(toluene) iron (0) complex decomposes to release toluene. The metal stays within the zeolite cavity in zero-valent, small cluster form. Due to constraints on the mobility of the metal atoms under these conditions, metal atoms will preferentially agglomerate into the α-cavities in the form of small clusters, due to the restricted space available, and the production of macro form colloidal metal on the outside surface of the zeolite will be minimised.

As a result, a loading of iron from 0.3 to 0.6 weight percent, based on the weight of the zeolite, is achieved in the catalyst. The material is now stable at room temperature, but must be stored in vacuo or under inert atmosphere, e.g. argon, until it is to be used. No further activation treatment of the material is necessary before it is employed as a catalyst, apart from possible removal oif residual solvent, its metal component already being present as a catalytically active substantially zero-valent form. The material can be used in any of the heterogeneous phase catalytic processes for which supported iron catalysts have previously been used, for example, hydrogenation, dehydrogenation, Fischer Tropsch reactions, catalytic carbon monoxide hydrogenation, and ammonia synthesis. Analysis has indicated that about 80—90% of the iron metal associated with the catalyst is present in small cluster (less than 100 atoms) form, at least the major portion of which is within the α-cavities of the zeolite.

Alternative solvents for use in the present invention include, in addition to toluene, tetrahydrofuran, methyltetrahydrofuran, glyme, (dimethyl ether of ethylene glycol), diglyme (dimethyl ether of diethylene glycol), alkenes, acyclic or cyclic dienes e.g. cylopentadiene, cyclo-octadiene, ethers, aromatic hydrocarbons (xylenes, mesitylene, methylnaphthalenes etc.), nitriles such as acetonotrile, and siloxanes. Mixtures of two or more solvents can also be used. Other solvent examples will readily occur to those skilled in the art. Solvent choice is determined by its ability to solvate the chosen catalytic metal in zero-valent form, the ability of the resultant complex to enter the pore and solvent inertness towards the appropriate zeolite. Ease of removal from the zeolite and solvent properties such as freezing point, boiling point and vapor pressure are all factors readily determinable from standard reference works. Toluene is especially suitable with the platinum group metals, with −100°C being a suitable operating temperature range for preparing the catalyst. 1,5-Cyclo-octadiene is suitable with iron, cobalt, nickel, palladium and

platinum. Tetrahydrofuran and methyltetrahydrofuran are suitable for use with silver and palladium, operating at temperatures in the –90°C to –125°C range. Glyme and diglyme, suitable for use with silver, molybdenum and chromium, can be operated at temperatures of –30°C and –60°C respectively.

If desired, using the process of the present invention, one can prepare catalysts having mixed metal clusters in or on the zeolite. This is accomplished by choosing a solvent or mixture of solvents which will solvate each of the chosen metals, and vaporizing the mixture of metals in the vicinity of the solvent as described above.

The invention is further described in the following specific examples, for illustrative purposes only.

Example 1

A slurry of 1.0 g of dehydrated Na-Y zeolite in 80 ml of toluene was transferred by canulation under nitrogen into a 2 litre flask attached to a rotary metal vapor apparatus. 100 mg of iron was resistively vaporized into the cooled (–100°C) slurry at a pressure of about $9 \times 10^{-5}$ torr, over a period of about 3/4 hour, monitoring the metal deposition rate by means of a quartz crystal microbalance situated just above the iron-containing crucible. The flask was rotated throughout the above procedure at a speed which ensured a thin film of the flurry formed as a wide band at the centre of the walls of the flask. After the metal evaporation was complete, the rotation was stopped and the contents of the flask removed through a cold nitrogen gas jacketed transfer tube (kept at –70°C) which extended directly into a dry ice/acetone cooled filtration apparatus equipped with a high vacuum teflon stopcocks. Still at low temperature, excess bis(toluene) iron(o) was filtered off through a glass frit, and the zeolite remaining on the frit was washed with $2 \times 20$ ml cold (–70°C) toluene. The zeolite was pumped to partial dryness and then allowed to warm slowly to room temperature under dynamic vacuum (c. 2 hours). The zeolite was left *in vacuo* for an additional 3 hours. All subsequent manipulation were performed in an argon filled glove box containing less than 1 ppm oxygen.

Magnetic measurements were conducted on samples of the product. The samples (approximately 100 mg of Fe°/NaY) were tapped into a glass tube, and packed down with a plug of glass wool. The tube was then sealed under a partial vacuum. Magnetic moment measurements as a function of applied field were obtained on a vibrating magnetometer (Janis Research Company, Model 150) at 4.2°K, 77°K and room temperature, and particle volumes were calculated using the Langevin Low Field and High Field approximations. The measurements of applied field (Kilo-Oersteds, KOE 79,5 K.A/m) and corresponding magnetic moments (EMU × 10) are plotted graphically as illustrated in Figure 1. The value for $M_S$ (saturation magnetization) is obtained from a separate plot of magnetic moment v. reciprocal of applied field, extrapolated to infinite field. Very small particles require higher fields for $M_S$, because it is more difficult to align their magnetic moments completely. The magnetic remanence $M_R$ derives from the presence of large particles in the sample. The percentages $M_S/M_R$ is equal to the percentage of particles exceeding a given size (in this case, about 30Å (3 nm), calculated from separate measurements of the magnetic relaxation time at 4.2°k).

The results of such magnetic measurements on four independently prepared samples prepared as described are given in Table 1 below. Diameters are determined assuming spherical geometry for the iron clusters. Samples A and B differ from samples C and D in that the former were washed with cold toluene after filtering whereas the latter were not.

TABLE 1

| Sample | Particle diameter (Å) nm measured at high field | Particle diameter (Å) nm measured at low field | Mean Particle diameter (Å) nm | % $M_R/M_S$ |
|---|---|---|---|---|
| A | (4.9) 0,49 | (9.7) 0,97 | (7.3) 0,73 | 8.0 |
| B | (4.3) 0,43 | (11.9) 1,19 | (8.0) 0,8 | 5.0 |
| C | (7.0) 0,7 | (8.6) 0,86 | (7.8) 0,78 | 22 |
| D | (3.4) 0,34 | (8.4) 0,84 | (5.9) 0,59 | 20 |

The Mossbauer results show (see later) that the samples may contain a substantial amount of iron oxide as well as zero-valent iron clusters.

The magnetization results indicate that the average particle size is about 6—8Å (0,6—0,8 nm) (if entirely zero-valent Fe) and 8—13Å (0,8—1,3 nm) (if entirely δ-iron oxide) in the use of each sample. Therefore one can infer, in the case if washed samples A and B, that approximately 80% of the iron clusters probably reside inside the α-cavities of the zeolite. Such particles must therefore be of a size less than 12Å (1,2 nm), the size of constraint of the zeolite cage. The remainder, represented by the $M_R/M_S$ fraction, lie on the outer surface of the zeolite particles, and have particle sizes greater than about 30Å (3 nm). The results also indicate that the metal clusters in each sample are largely uniform in size. In sample A, for example, the clusters within the zeolite cavity are of a particle size in the approximate range 4.9—9.7 Å (0,49—0,97Å). (If entirely zero-valent iron) and 7.8—15.1Å (0,78—1,51 nm) (if entirely δ-iron oxide.) Samples C and D also indicate that the invention provides catalysts in which the clusters in the zeolite cavities are at least predominatly of a size within a 5Å (0,5 nm) range. The particle diameter measured at high and low fields can confidently be interpreted to embrace at least 80% of the clusters within the zeolite cavity.

Example 2

The catalyst preparation procedure described in Example 1 was repeated, using approximately 20% $^{57}Fe$ enriched iron powder as the evaporant. Samples of the resultant products were analysed by Mossbauer spectroscopy.

400 mg of dry $Fe^{\circ}$/NaY was tranferred under argon to an airtight Mossbauer cell. Mossbauer spectra were recorded over a period of 4 days — 1 week at room temperature using a 25 milli Curie $^{57}Co$/Rh source obtained from the New England Nuclear Co. All spectra were fitted using a non-linear least square fitting programme, as two quadrupole doublets, resulting in $\chi^2$ values of less than 300.

A representative Mossbauer spectrum is shown in Figure 2. One doublet is ascribed to the zero-valent iron of the iron cluster (isomer shift 0.14 mm/sec) and the other doublet is ascribed to the iron oxide apparent of the clusters (isomer shift 0.31 mm/sec). Typical Mossbauer parameter associated with Figure 2 are as follows:

| | |
|---|---|
| Isomer shift, IS, | 0.14 mm/sec |
| Quadrupole split, QS, | 0.60 mm/sec |
| Relative Area | 37.00% |
| Isomer shift $IS_2$ | 0.31 mm/sec |
| Quadrupole split $QS_2$ | 1.08 mm/sec |
| Relative Area | 63.00% |

Comparison of these isomer shift values with those available in the literature for small iron clusters in oxide or zeolite supports generated by other methods indicates that the iron clusters have substantial zero-valent component, with the large quadrupole splitting demonstrating a high electronic charge asymmetry, characteristic of very small ion clusters and/or interaction with the electrostatic field gradient of the zeolite cage.

Example 3

An $Fe^{\circ}$/NaY zeolite catalyst was prepared as described for washed samples in Example 1, and its behaviour for catalytic carbon monoxide hydrogenation was tested. A catalytic flow system with on-line gas chromatographic analysis for $C_1$—$C_5$ hydrocarbon products was used, at a temperature of 260°C, hydrogen: carbon monoxide ratio of 2:1 and a gas flow rate of 15 ml per min. The product mixture had the following analysis:

Mole % $C_1$ — 19
Mole % $C_2$ — 2
Mole % $C_3$ — 9
Mole % $C_4$ — 47
Mole % $C_5$ — 23

The percentage of olefins in the total hydrocarbon product (methane excepted) was greater than 90%. The low metane and high butene production is also noteworthy.

Example 4

The procedure of example 1 was essentially repeated, but using cobalt as the metal, along with toluene solvent and Na-Y zeolite. The catalyst was prepared by vaporizing the metal by resistive heating in the presence of a thin rotating film of solvent-zeoilite slurry at low temperature and vapor pressure, then filtering off excess liquid and allowing the solid to warm to room temperature under an inert atmosphere to

volatilize the solvent. Essentially similar results were obtained, small clusters of predominantly zero-valent cobalt being deposited in the zeolite cavities. The resulting product was catalytically active in gas phase reactions.

## Claims

1. A zeolite-metal catalyst having an effective amount of catalytically active metal in the form of substantially zero-valent clusters of metal atoms, at least 80% of the metal clusters within the zeolite cavity being of a size within about a five Angstrom (0,5 nm range).

2. A zeolite-metal catalyst according to claim 1, said catalyst being substantially free from contaminants deriving from co-deposition agents.

3. A zeolite-metal catalyst according to claim 1 or claim 2, wherein the clusters of metal atoms contain up to about 100 atoms per cluster.

4. A zeolite-metal catalyst according to claim 3, wherein the clusters of metal atoms within the zeolite cavity are of a size range of from about 4 Å (0,4 nm) to about 12 Å (1,2 nm) at least 80% thereof being within a five Å (0,5 nm) range inside said range range.

5. A zeolite-metal catalyst according to any preceding claim, wherein the metal is selected from the group consisting of iron, cobalt, molybdenum, titanium, zirconium, vanadium, chromiun, niobium, tantalum, platinum, palladium, rhodium, ruthenium, osmium, iridium, tungsten, nickel, copper and silver.

6. A zeolite-metal catalyst according to any preceding claim wherein the metal is selected from the group consisting of iron, ruthenium, osmium, iridium, cobalt, rhodium, nickel, palladium, platinum, titanium, vanadium, chromium, molybdenum and silver.

7. A zeolite-metal catalyst according to any preceding claim wherein the metal is selected from the group consisting of iron, cobalt, and nickel.

8. A zeolite-metal catalyst according to any preceding claim wherein the zeolite is a Faujasite type natural zeolite.

9. A zeolite-metal catalyst according to any one of claims 1—7, wherein the zeolite is a synthetic zeolite.

10. A process of preparing zeolite-metal catalysts having a substantial amount of catalytically active metal deposited in the cavities of the zeolite is zero-valent, small cluster form, which comprises:

vaporizing the metal in the vicinity of an organic liquid solvent;

dissolving the metal as a labile solvated zero-valent complex in the liquid solvent;

contacting a solution of the solvated metal complex, with a solid zeolite crystalline material so as to cause diffusion of the solvated metal complex into the cavities of the zeolite;

removing excess liquid solvent or solution;

and allowing the zeolite to warm so as to decompose the labile solvated metal complex in the cavities and deposit zero-valent small cluster metal therein.

11. The process of claim 10, including the step of washing the zeolite-metal complex with solvent under conditions at which the solvated metal complex is stabile, after removal of excess liquid solvent or solution therefrom.

12. The process of claim 10 or 11 wherein the metal vaporation, the dissolving of the metal, the contacting with zeolite and the removal of excess liquid all take place at low temperatures.

13. The process of claim 12 wherein said low temperature is from room temperature down to freezing point of the chosen organic solvent.

14. The process of claim 13 wherein the metal is vaporized under conditions of low valor pressure, in the vicinity of a moving film of the chosen organic solvent.

15. The process of any of claims 10—14 wherein the moving film of organic solvent comprises a preformed slurry of solvent and zeolite.

16. The process of any of claims 10—15 wherein the metal selected from the group consisting of iron, cobalt, molybdenum, chromium, titanium, zirconium, vanadium, niobium, tantalum, platinum, palladium, rhodium, rughenium, osmium, iridium, tungsten, nickel, copper and silver.

17. The process of any of claims 10—15 wherein the metal is selected from the group consiting of iron, ruthenium, osmium, iridium, cobalt, rhodium, nickel, palladium, platinum, titanium, vanadium, chromium, molybdenum and silver.

18. The process of any of claims 10—17 wherein a plurality of metals is deposited into and/or onto a zeolite support, either simultaneously or sequentially.

19. The process of any of claims 10—18 wherein the zeolite is a Faujasite type natural zeolite.

20. The process of any of claims 10—18 wherein the zeolite is a synthetic zeolite.

21. The process of any of claims 10—20 wherein the zeolite pores have openings of 3Å to 13Å (0,3 to 1,3 nm).

22. The process of any of claims 10—21 wherein the solvent is selected from aromatic hydrocarbons, ethers, alkenes, acrylic or cyclic dienes, nitriles, and siloxanes.

23. The process of any of claims 10—22 wherein the metal is iron, cobalt or nickel and the solvent is toluene.

24. The process of any of claims 10—23 wherein iron is vaporized in a rotating vessel containing a

liquid slurry of zeolite and toluene, said slurry being disposed as a moving film on the wall of said rotating vessel.

25. The process of any of claims 10—24 wherein the said zeolite metal catalyst is supported on a non-zeolite matrix.

26. A gas phase catalytic conversion process, which comprises contacting a gaseous reactant feedstock under reaction-promoting conditions of temperature and pressure with a zeolite-metal catalyst according to any of claims 1—9 so as to cause catalytic conversion of said feedstock, and recovering and separating reaction products therefrom.

**Patentansprüche**

1. Zeolith-Metallkatalysator, gekennzeichnet durch einen wirksamen Gehalt an katalytisch aktiven Metall in Form von im wesentlichen nullvalenten Anhäufungen von Metallatomen, wobei mindestens 80% der metallischen Anhäufungen in der Zeolithkavität eine Größe im Bereich von ungefähr fünf Ångström (0,5 nm) aufweisen.

2. Zeolith-Metallkatalysator nach Anspruch 1, dadurch gekennzeichnet, daß der ganannte Katalysator im wesentlichen frei von aus abgeschiedenen Agenzien abgeleiteten Verunreinigungen ist.

3. Zeolith-Metallkatalysator nach Anspruch 1 oder 2, dadurch gekennzeichnet, daß die Anhäufungen von Metallatomen ungefähr 100 Atome pro Anhäufung enthalten.

4. Zeolith-Metallkatalysator gemäß Anspruch 3, dadurch gekennzeichnet, daß die Anhäufungen von Metallatomen in der Zeolithkavität einen Größenbereich von ungefähr 4 Ångstrom (0,4 nm) bis ungefähr 12 Ångstrom (1,2 nm) aufweisen, wobei mindestens 80% davon in einem Bereich von 5 Å (0,5 nm) innerhalb des genannten Größenreichs liegen.

5. Zeolith-Metallkatalysator nach irgendeinem der vorhergehenden Ansprüche, dadurch gekennzeichnet, daß das Metall aus einer Gruppe ausgewählt ist, Eisen, Kobalt, Molybdän, Titan, Zirkonium, Vanadium, Chrom, Niob, Tantal, Platin, Palladium, Rhodium, Ruthenium, Osmium, Iridium, Wolfram, Nickel, Kupfer und Silber enthält.

6. Zeolith-Metallkatalysator nach irgendeinem der vorhergehenden Ansprüche, dadurch gekennzeichnet, daß das Metall aus einer Gruppe ausgewählt ist, die Eisen, Ruthenium, Osmium, Iridium, Kobalt, Rhodium, Nickel, Palladium, Platin, Titan, Vanadium, Chrom, Molybdän und Silber enthält.

7. Zeolith-Metallkatalysator nach irgendeinem der vorhergehenden Ansprüche, dadurch gekennzeichnet, daß das Metall aus einer Gruppe ausgewählt ist, die Eisen, Kobalt und Nickel enthält.

8. Zeolith-Metallkatalysator nach irgendeinem der vorhergehenden Ansprüche, dadurch gekennzeichnet, daß das Zeolith ein natürliches Zeolith nach dem Faujasite-Typ ist.

9. Zeolith-Metallkatalysator nach irgendeinem der Ansprüche 1 bis 7, dadurch gekennzeichnet, daß das Zeolith ein synthetisches Zeolith ist.

10. Verfahren zur Herstellung von Zeolith-Metallkatalysatoren, die im wesentlichen einen Betrag eines katalytisch aktiven Metalls aufweisen, welches in den Kavitäten des Zeoliths in nullvalenter, kleiner Anhäufungsform niedergeschlagen ist, gekennzeichnet durch:

Verdampfung des Metalls in der Nachbarschaft eines flüssigen, organischen Lösungsmittels;

Auflösen des Metalls als labiler, gelöster, nullvalenter Komplex in dem Lösungsmittel;

Kontaktierung einer Lösung des gelösten Metall-komplexes mit einem festen, zeolithisch, kristallinen Material, um eine Diffusion des gelösten Metallkomplexes in die Kavitäten des Zeoliths hervorzurufen;

Enterfernung des überschüssigen Lösungsmittels oder der Lösung;

Erwärmung des Zeoliths, um den labilen, gelösten Metallkomplex in den Kavitäten zu zersetzen und sich als nullvalente, schmale Metallanhäufung darin niederzuschlagen.

11. Verfahren nach Anspruch 10, dadurch gekennzeichnet, daß der Zeolithmetallkomplex mit einem Lösungsmittels unter Bedingungen gewaschen wird, bei welchen der gelöste Metallkomplex stabil ist nach Entferung des überschüssigen, flüssigen Lösungmittels oder der Lösung davon.

12. Verfahren nach den Ansprüchen 10 und 11, dadurch gekennzeichnet, daß die Metallverdampfung, die Kontaktierung mit dem Zeolith und die Entfernung der überschüssigen Flüssigkeit bei niedrigen Temperaturen durchgeführt wird.

13. Verfahren nach Anspruch 12, dadurch gekennzeichnet, daß die genannten niedrigen Temperaturen von Raumtemperaturen bis zum Gefrierpunkt des gewälten, organischen Lösungsmittels reichen.

14. Verfahren nach Anspruch 13, dadurch gekennzeichnet, daß das Metall unter den Bedingungen niedrigen Dampfdruckes in der Nähe eines bewegten Filmes des gewählten organischen Lösungsmittels verdamft wird.

15. Verfahren nach irgendeinem der Ansprüche 10 bis 14, dadurch gekennzeichnet, daß der bewegte Film des organischen Lösungsmittels aus einer vorgeformten Bindung von Lösungsmittel und Zeolith besteht.

16. Verfahren nach irgendeinem der Ansprüche 10 bis 15, dadurch gekennzeichnet, daß das Metall ausgewählt wird aus einer Gruppe, die Eisen, Kobalt Molybdän, Chrom, Titan, Zirkonium, Vanadium, Niob, Tantal, Platin, Palladium, Rhodium, Ruthenium, Osmium, Iridium, Wolfram, Nickel, Kupfer und Silber enthält.

17. Verfahren nach irgendeinem der Ansprüche 10 bis 15 dadurch gekennzeichnet, daß das Metall

ausgewählt wird aus einer Gruppe, die Eisen, Ruthenium, Osmium, Iridium, Kobalt, Rhodium, Nickel, Palladium, Platin, Titan, Vanadium, Chrom, Molybdän und Silber enthält.

18. Verfahren nach irgendeinem der Ansprüche 10 bis 17, dadurch gekennzeichnet, daß eine Mehrzahl von Metallen in oder auf einen Zeolithträger entweder simultan oder sequentiell niedergeschlagen wird.

19. Verfahren nach irgendeinem der Ansprüche 10 bis 18, dadurch gekennzeichnet, daß das Zeolith ein natürliches Zeolith vom Faujasite-Typ ist.

20. Verfahren irgendeinem der Ansprüche 10 bis 18, dadurch gekennzeichnet, daß das Zeolith ein synthetisches Zeolith ist.

21. Verfahren nach irgendeinem der Ansprüche 10 bis 20, dadurch gekennzeichnet, daß das Zeolith Poren mit Öffnungen von 3 Å bis 13 Å (0,3 bis 1,3 nm) aufweist.

22. Verfahren nach irgendeinem der Ansprüche 10 bis 21, dadurch gekennzeichnet, daß das Lösungsmittels aus aromatischen Kohlenwasserstoffen, Estern, Alkenen, acrylischen oder zyklischen Dienen, Nitrilen und Siloxanen ausgewählt ist.

23. Verfahren nach irgendeinem der Ansprüche 10 bis 22, dadurch gekennzeichnet, daß das Metall aus Einen, Kobalt, oder Nickel besteht und die Lösung aus Tolwin besteht.

24. Verfahren nach irgendeinem der Ansprüche 10 bis 23, dadurch gekennzeichnet, daß das Eisen in einem rotierenden Gefäß verdampft wird, welches eine flüssige Bindung von Zeolith und Tolwin enthält, wobei die genannte Bindung in einem bewegten Film an der Wand des genannten Gefäßes niedergeschlagen wird.

25. Verfahren nach irgendeinem der Ansprüche 10 bis 24, dadurch gekennzeichnet, daß der genannte Zeolith-Metallkatalysator von einer nichtzeolithischen Matrix gestützt wird.

26. Katalytischer Umwandlungsprozeß in Gasphase, gekennzeichnet durch, die Kontaktierung eines gasförmigen Reaktionsmittels unter die Reaktion beschleunigenden Bedingungen des Druckes und der Temperatur mit einem Zeolith-Metallkatalysator gemäß irgendeinem der Ansprüche 1 bis 9, um eine katalytische Umwandlung des genannten Reaktionsmittels zu bewirken und die Reaktionsprodukte umzuwandeln und davon zu trennen.

**Revendications**

1. Catalyseur zéolite-métal caractérisé en ce qu'il comprend une quantité efficace de métal à activité catalytique sous forme d'amas d'atomes métalliques de valence sensiblement égale à zéro, au moins 80% des amas métalliques à l'intérieur de la cavité de la zéolite étant d'une dimension d'environ cinq angström (0,5 nm).

2. Catalyseur zéolite-métal suivant la revendication 1, caractérisé en ce qu'il ne contient sensiblement pas de contaminant dérivant d'agent de co-dépôt.

3. Catalyseur zéolite-métal suivant la revendication 1 ou 2, caractérisé en ce que les amas d'atomes métalliques qu'il comprend, contiennent jusqu'à environ 100 atomes par amas.

4. Catalyseur zéolite-métal suivant la revendication 3, caractérisé en ce qu'il comprend des amas d'atomes métalliques à intérieur de la cavité zéolite, qui ont des dimensions variant d'environ 4 Å (0,4 nm) à environ 12 Å (1,2 nm), au moins 80% d'entre eux sont d'une dimension d'environ 5 Å (0,5 nm) dans le domaine des dimensions sus-nommées.

5. Catalyseur zéolite-métal suivant l'une quelconque des revendications précédentes, caractérisé en ce que le métal qu'il contient est choisi dans le groupe comprenant le fer, le cobalt, le molybdène, le titane, le zirconium, le vanadium, le chrome, le niobium, le tantale, le platine, le palladium, le rhodium, le ruthénium, l'osmium, l'iridium, le tungstène, le nickel, le cuivre et l'argent.

6. Catalyseur zéolite-métal suivant l'une quelconques des revendications précédentes, caractérisé en ce que le métal qu'il contient est choisi dans le groupe comprenant le fer, le ruthénium, l'osmium, l'iridium, le cobalt, le rhodium, le nickel, le palladium, le platine, le titane, le vanadium, le chrome, le molybdène et l'argent.

7. Catalyseur zéolite-métal suivant l'une quelconque des revendications précédentes, caractérisé en ce que le métal qu'il contient est choisi dans le groupe comprenant le fer, le cobalt et le nickel.

8. Catalyseur zéolite-métal suivant l'une quelconque des revendications précédentes, caractérisé en ce que la zéolite qu'il contient est une zéolite naturelle du type Faujasite.

9. Catalyseur zéolite-métal suivant l'une quelconque des revendications 1 à 7, caractérisé en ce que la zéolite qu'il contient est une zéolite synthétique.

10. Procédé de fabrication de catalyseurs zéolite-métal, caractérisé en ce qu'il comprend une quantité efficace de métal à acrivité catalytique déposés dans les cavités de la zéolite sous une forme de petits amas, qui consiste à:

Vaporiser le métal au voisinage d'un solvant liquide organique;

Dissoudre le métal de valence zéro sous forme de complexe labile solvaté;

Mettre en contact une solution du complexe métallique avec une matériau solide cristallin de zéolite, de manière à provoquer la diffusion du complexe métallique sovaté dans les cavités de la zéolite;

Eliminer le solvant liquide ou la solution en excès;

Et chauffer la zéolite, de manière à décomposer le complexe labile métallique solvaté dans les cavités et y faire déposer le métal de valence zéro sous forme de petits amas.

11. Procédé suivant la revendication 10, caractérisé en ce qu'il comprend d'étape de lavage du complexe zéolite'métal avec le solvant dans des conditions où ce complexe métallique solvaté est stable, après l'élimination du solvant liquide ou de la solution en excès.

12. Procédé suivant la revendication 10 ou 11, caractérisé en ce que la vaporisation du métal, sa dissolution, sa mise en contact avec la zéolite et l'élimination de l'excès de liquide sont effectuées à basse température.

13. Procédé suivant la revendication 12, caractérisé en ce que la température basse va de la température ambiante au point de solidification du solvant organique choisi.

14. Procédé suivant la revendication 13, caractérisé en ce que le métal est vaporisé dans des conditions de basse pression de vapeur, au voisinage d'un film en mouvement du solvant organique choisi.

15. Procédé suivant l'une quelconque des revendications 10 à 14, caractérisé en ce que le film en mouvement de solvant organique comprend une bouillie préparée à l'avance de solvant et de zéolite.

16. Procédé suivant l'une quelconque des revendications 10 à 15, caractérisé en ce que le métal est choisi dans le groupe comprenant le fer, le cobalt, le molybdène, le chrome, le titane, le zirconium, le vanadium, le niobium, le tantale, le platine, le palladium, le rhodium le rhuthénium, l'osmium, l'iridium, le tungstène, le nickel, le cuivre et l'argent.

17. Procédé suivant l'une quelconque des revendications 10 à 15, caractérisé en ce que le métal est choisi dans le groupe comprenant le fer, le ruthénium, l'osmium, l'iridium, le cobalt, le rhodium, le nickel, le palladium, le platine, le titane, le vanadium, le chrome, le molybdène et l'argent.

18. Procédé suivant l'une quelconque des revendications 10 à 17, caractérisé en ce que l'on dépose plusieurs métaux dans et/ou sur un support en zéolite, soit simultanément, soit successivement.

19. Procédé suivant l'une quelconque des revendications 10 à 18, caractérisé en ce que la zéolite est une zéolite naturelle du type Faujasite.

20. Procédé suivant l'une quelconque des revendications 10 à 18, caractérisé en ce que la zéolite est une zéolite synthétique.

21. Procédé suivant l'une quelconque des revendications 10 à 20, caractérisé en ce que les pores la zéolite ont des ouvertures de 3 Å à 13 Å (0,3 à 1,3 nm).

22. Procédé suivant l'une quelconque des revendications 10 à 21, caractérisé en ce que le solvant est choisi parmi les hydrocarbures aromatiques, les éthers, les alcènes, les diènes acryliques ou cyclique, les nitriles et les siloxannes.

23. Procédé suivant l'une quelconque des revendications 10 à 22, caractérisé en ce que le métal est le fer, le cobalt ou le nickel et la solvant est le toluène.

24. Procédé suivant l'une quelconque des revendications 10 à 23, caractérisé en ce que le fer est vaporisé dans un récipient contenant une bouillie liquide de zéolite et de toluène, cette bouillie étant mise sous forme d'un film en mouvement sur la paroi dudit récipient rotatif.

25. Procédé suivant l'une quelconque des revendications 10 à 24, caractérisé en ce que le catalyseur zéolite-métal est sur support non en zéolite.

26. Procédé de conversion en phase gazeuse, caractérisé en ce qu'il comprend la mise en contact d'une alimention réactive gazeuse, dans des conditions de température et de pression favorisant la réaction, avec un catalyseur zéolite-métal suivant l'une quelconque des revendications 1 à 9, de manière à provoquer la conversion catalytique de ladite alimentation et la récupération et la séparation des produits de la réaction.

PLOT OF MAGNETIC MOMENT VERSUS APPLIED FIELD AT 4·2K:
SAMPLE D

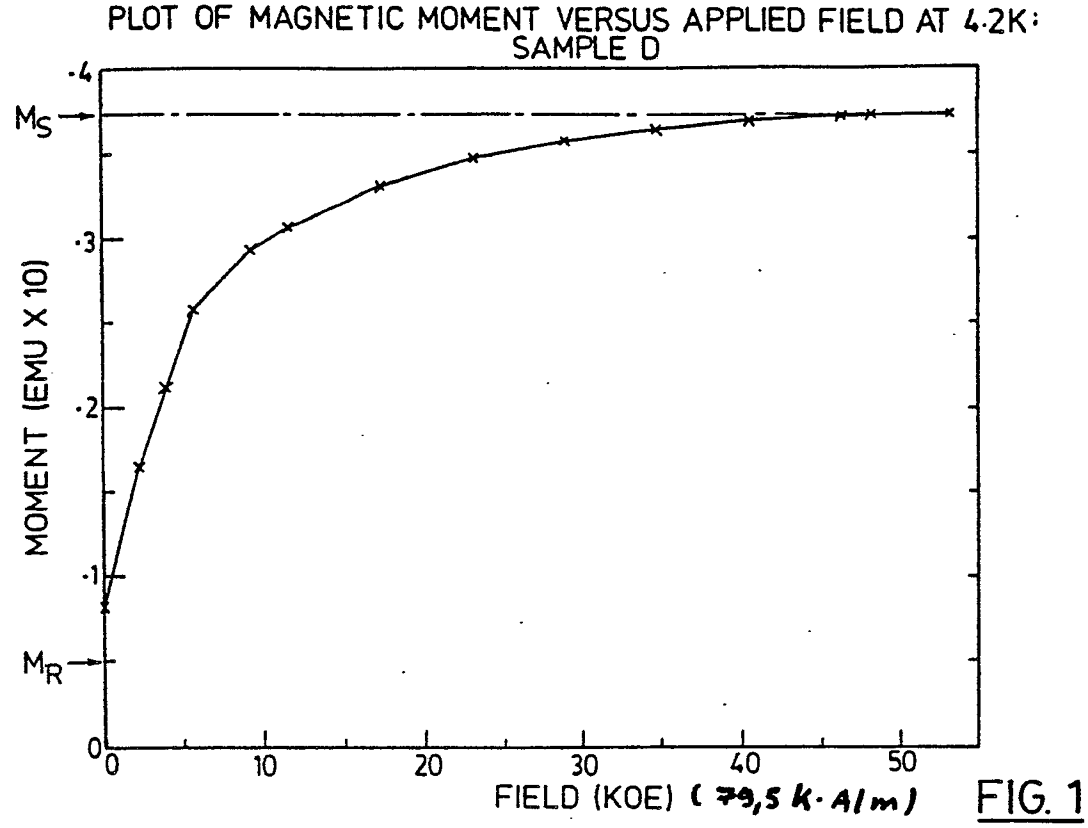


FIG. 1

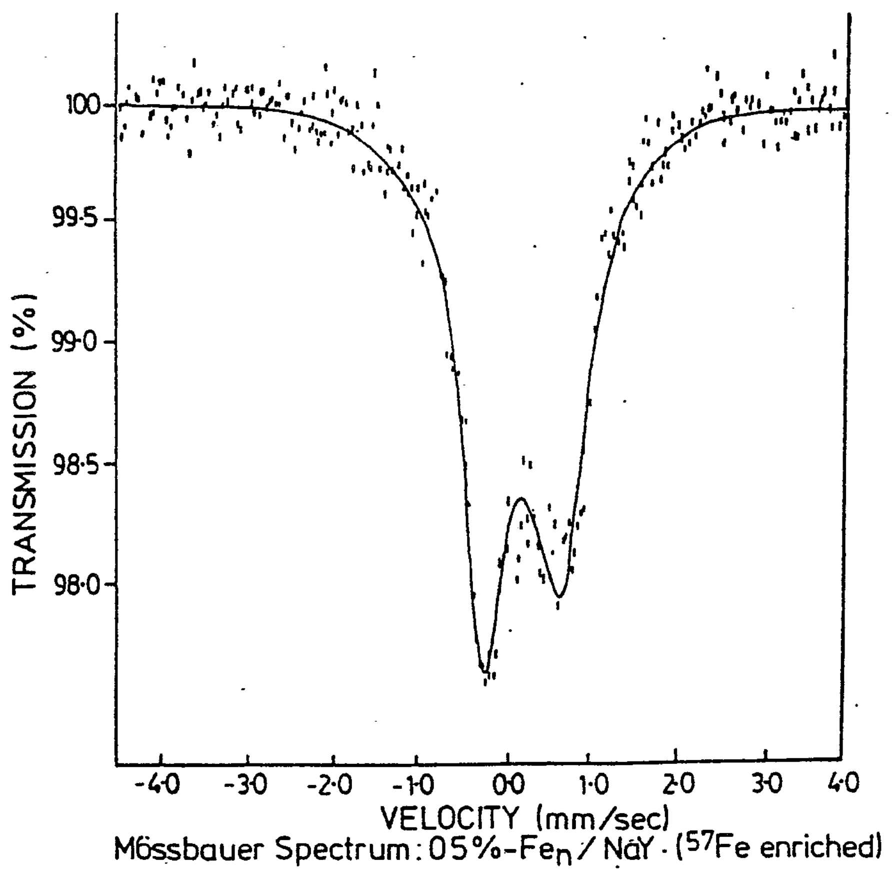


Mössbauer Spectrum: 0·5%-$Fe_n$ / NaY · ($^{57}$Fe enriched)

FIG. 2